# EUROPÄISCHE PATENTSCHRIFT

(11) **EP 0 515 606 B1**
(45) Veröffentlichungstag und Bekanntmachung des Hinweises auf die Patenterteilung: **28.02.1996**
(21) Anmeldenummer: 92900186.5
(22) Anmeldetag: 17.12.1991
(51) Int. Cl.: B65G 53/24

(54) **SAUGLADEGERÄT FÜR TROCKENE MATERIALIEN**
VACCUM CHARGING APPLIANCE FOR DRY MATERIALS
APPAREIL DE CHARGEMENT DE MATERIAUX SECS PAR ASPIRATION

(30) Priorität: 24.12.1990 CH 4097/90
(43) Veröffentlichungstag der Anmeldung: 02.12.1992
(73) Patentinhaber: SCHNEIDER, Hans, CH-3202 Frauenkappelen (CH)
(72) Erfinder: SCHNEIDER, Hans, CH-3202 Frauenkappelen (CH)
(74) Vertreter: Schwabe, Hans-Georg, Dipl.-Ing.
(86) Internationale Anmeldenummer: CH9100271
(87) Internationale Veröffentlichungsnummer: WO9211192

(56) Entgegenhaltungen:
- EP-A- 0 047 905
- EP-A- 0 059 781
- GB-A- 1 329 555
- GB-A- 2 071 515
- US-A- 2 347 105
- US-A- 3 541 631
- US-A- 4 017 281
- US-A- 4 344 723

## Beschreibung

Die vorliegende Erfindung betrifft ein Saugladegerät gemäß dem Oberbegriff des Patentanspruchs 1.

Bei Gebäudeumbauten oder Gebäuderenovationen steht man immer wieder vor dem Problem, dass der anfallende Bauschutt aus dem Gebäude entfernt und abtransportiert werden muss. Bauschutt kann unterschiedlich beschaffen sein. Er kann trocken oder feucht, leicht oder schwer, feinkörnig oder grobkörnig sein oder andere Eigenschaften aufweisen. Welche Mittel für die Beseitigung und den Abtransport am geeignetsten sind, hängt von der Beschaffenheit und der Menge des Schuttes ab.
Grober Bauschutt kann mit der Schaufel auf eine Schubkarre geladen und mit dieser zu einem Schuttrohr gebracht werden. Das Schuttrohr führt vom Stockwerk, aus dem der Bauschutt entfernt werden muss, hinunter in eine Transportmulde vor dem Gebäude. Volle Transportmulden transportiert man mit einem Lastwagen ab. Falls der Bauschutt trocken ist und feinkörnige Bestandteile enthält, kann er nicht auf diese Art und Weise beseitigt werden, da dabei zuviel Staub entstehen würde. Die Staubentwicklung ist besonders bei Baustellen in Städten problematisch. Durch den Staub werden die Passanten belästigt. Er verschmutzt zudem die Strassen und parkierende Autos und kann unter Umständen sogar in benachbarte Wohn- oder Geschäftshäuser eindringen. Ein Bereich, in dem staubentwickelnder Bauschutt anfallen kann, sind Bodensanierungen in alten Gebäuden. Oft sind dort die Zwischenböden mit Sägemehl, Hobelspänen, Schmutz und anderen feinkörnigen Materialien gefüllt, die bei einer Sanierung entfernt werden müssen. Mit konventionellen Mitteln ist die Beseitigung von solchen Materialien äusserst mühsam.
Eine geeignete Lösung wäre der Einsatz von Saugladern. Diese Geräte sind mit einem Saugaggregat ausgerüstet, welches das Material durch Förderschläuche in einen Sammelcontainer saugt. Die bestehenden Saugladegeräte sind fest auf Lastwagen montiert und arbeiten mit Leistungen von 200 bis 360 PS. Die hohe Saugleistung erlaubt auch das Aufsaugen von nassen, schweren Materialien, wie Klärschlamm, Ölschlamm, feuchten Salzen u.s.w. Bei trockenen Materialien ist ihr Einsatz aber nur für grosse Materialvolumen von 10 Kubikmetern und mehr zweckmässig. Für kleinere Materialmengen von z.B. 3 - 7 Kubikmetern ist ihre Leistung und die Kapazität ihres Containers überdimensioniert. Der Energieverbrauch und die Kosten sind daher für kleine Materialmengen zu gross. Zudem hat es sich gezeigt, dass die bestehenden Sauglader wegen ihrer komplizierten Bauweise störungsanfällig sind.

Ein gattungsgemäßes Saugladegerät ist aus der US-A-3,541,631 bekannt. Dieses Saugladegerät ist fest über ein Schwenkgelenk mit einem Rahmen verbunden, der auf einer Vortriebsvorrichtung installiert ist. Der Sammelbehälter des Saugladegerätes kann über die Schwenkvorrichtung nach hinten gekippt werden, um den aufgesaugten Schutt bzw. Müll zu entleeren. Das bekannte Saugladegerät ist nicht dazu geeignet, als separate, selbständig funktionstüchtige Einheit an einem Einsatzort abgestellt zu werden.

Aus der US-A-4,017,281 ist ein Saugladegerät bekannt, das mit dem gattungsgemäßen Saugladegerät vergleichbar ist, jedoch ebenfalls nicht separat funktionsfähig ist.

Aus der EP-A-0 047 905 ist eine Kehrmaschine für den Anbau an einem Trägerfahrzeug bekannt. Auch dieses Gerät, das von dem Trägerfahrzeug abmontiert werden kann, ist nicht separat funktionsfähig. Darüber hinaus ist es speziell für die Verwendung als Straßenreinigungsgerät ausgebildet, wobei der Schmutz, der sich auf der Straße befindet, über einen rotierenden Besen in einen Auffangtrichter geschleudert wird, um von dort aus einem Saugrohr und einem Sammelbehälter zugeführt werden zu können.

Gegenüber diesem Stand der Technik stellt sich der Erfindung die Aufgabe, ein Saugladegerät zu schaffen, das selbständig ist und mit einem Muldentransportlastwagen an eine beliebige Stelle transport werden kann, um dort abgestellt zu werden und dort stationär und autark verwendbar zu sein, um später wieder von dem Muldentransportlastwagen abgeholt werden zu können.

Diese Aufgabe wird durch ein Saugladegerät mit den im Patentanspruch 1 aufgeführten Merkmalen gelöst.

Zweckmäßige Ausgestaltungen des erfindungsgemäßen Saugladegeräts ergeben sich aus den Unteransprüchen.

Die gemäß der Erfindung zu erzielenden Vorteile beruhen darauf, daß der Schuttank mit Standbeinen versehen ist und zum Anheben des Gerätes auf beiden Seiten des Schuttanks je zwei zapfenartige Halterungen angeordnet sind, so daß das Saugladegerät durch einen Muldentransportlastwagen aufhebbar ist.

Nachfolgend wird die Erfindung anhand einer bevorzugten Ausführungsform unter Bezugnahme auf die beigefügten Figuren näher erläutert.

Es zeigen:

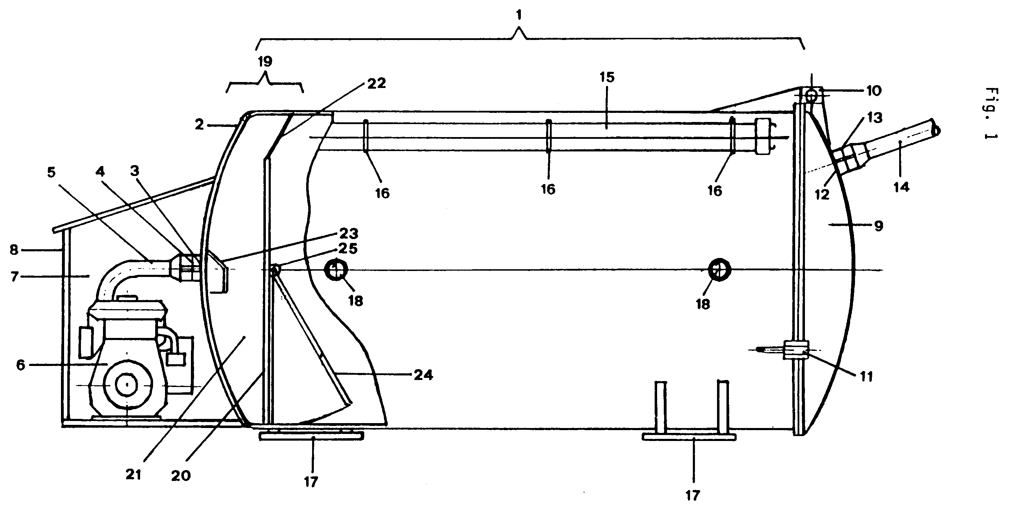

- Fig. 1: Seitenansicht des Saugladegerätes

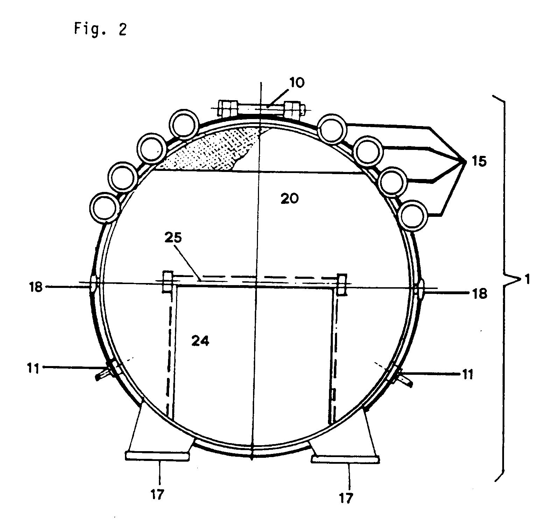

- Fig. 2: Querschnitt durch den Schuttank des Saugladegerätes
Das Saugladegerät ist mit einem zylinderförmigen, liegenden Schuttank 1 ausgerüstet. Die Länge des Tankes beträgt ca. 4 Meter und sein Durchmesser ca 1,80 Meter. Er kann 7 Kubikmeter Schutt aufnehmen. Die eine Stirnseite des Tankes besteht aus einer festen, leicht gewölbten Wand 2, in deren Zentrum sich eine runde Öffnung 3 mit einem Anschluss 4 für das Saugrohr 5 eines Saugaggregates 6 befindet. Das Saugaggregat 6 ist in einem Motorenraum 7 untergebracht, der durch eine einfache, gedeckte Kabine 8 gebildet wird, die am Tank 1 an der eben erwähnten Stirnwand 2 befestigt ist. Die andere, dem Motorenraum 7 gegenüberliegende Stirnseite ist mit einem runden, leicht gewölbten Deckel 9 verschlossen. Der Deckel 9 lässt sich an einem Scharnier 10 an der Oberseite des Tankes 1 aufklappen. Er kann mit Hilfe von je einem Verschluss 11 auf seiner linken und rechten Seite luftdicht abgeschlossen werden. Im oberen Drittel des Deckels 9 ist zentral eine Öffnung 12 mit einem Anschluss 13 für den Förderschlauch 14 angebracht. Der Förderschlauch 14 hat einen Durchmesser von 110 mm. Er wird aus einzelnen Schlauchelementen 15, die je eine Länge von ca. 4 Metern haben, zusammengesetzt. Für den Transport können die Schlauchelemente 15 auf der Oberseite des Tankes in dessen Längsrichtung mit Hilfe von Schlauchträgern 16 festgemacht werden. Das Saugladegerät steht auf vier Standbeinen 17. Auf beiden Seiten des Schuttankes 1 sind auf halber Höhe in einer Distanz von 2,35 Metern zwei Halterungen (Welaki) 18 angebracht, an denen das Gerät durch einen Muldentransportlastwagen aufgehoben werden kann.
Das Saugaggregat hat eine Leistung von 60 bis 90 PS. Es erzeugt im Tank 1 ein Vakuum, das den zu entfernenden Bauschutt durch den Förderschlauch 14 in den Tank 1 saugt. Der Bauschutt tritt durch die Ansaugöffnung 12 in den Tank 1 ein. Die grossen, schweren Schuttpartikel setzen sich im Tank 1 ab, während die kleinen, leichten Partikel vom Luftstrom, der sich in Richtung des Saugaggregates 6 bewegt, mitgerissen werden. Um diese leichten Partikel vom Luftstrom absondern zu können, ist das Saugladegerät mit einem Vorabscheider 19 ausgerüstet. Für die Abscheidung ist im Tank 1 nahe der Stirnwand 2, an welcher der Anschluss für das Saugrohr 5 des Saugaggregates 6 angebracht ist, mit einer Querwand 20 ein Raum 21 abgegrenzt. Der Luft-Schuttpartikel-Strom tritt durch eine Öffnung 22 an der Oberseite der Querwand 20 in diesen Vorabscheiderraum 21 ein. Er wird durch eine nur nach unten offene Abschirmung 23 daran gehindert, direkt in die Mündung 3 des Saugrohres 5 einzutreten. Dadurch wird der Luftstrom aus seiner geradlinigen Bewegung abgelenkt und verliert dadurch die nötige Kraft, um die feineren Schuttpartikel weiterhin mitzureissen. Die feinen Schuttpartikel setzen sich im Vorabscheiderraum 21 ab. Die weitgehend schuttpartikelfreie Luft wird vom Saugaggregat 6 durch die Austrittsöffnung 3 aus dem Tank 1 gesaugt.
Zum Entleeren wird das Saugladegerät mit einem Muldentransportlastwagen zu einer Deponie gebracht. Die Verschlüsse 11 des Deckels 9 werden geöffnet, und das Saugladegerät nach hinten geneigt. Durch die Neigung klappt der Deckel 9 auf, und der Bauschutt kann aus dem Tank 1 hinausgleiten. Damit auch der Vorabscheiderraum 21 entleert werden kann, ist in der unteren Hälfte der Querwand 20 eine Klappe 24 eingebaut, die sich an einem Scharnier 25 an ihrer oberen Kante ebenfalls aufschwenken lässt.

Das neue Saugladegerät weist gegenüber bisher bestehender Sauglader wesentliche Vorteile auf.
Es ist nicht fest auf einem Muldentransportlastwagen montiert. Dieser wird dadurch nur während des Transportes des Saugladegerätes beansprucht. Während der Dauer der Saugarbeiten kann er für andere Transporte eingesetzt werden.
Das neue Saugladegerät ist für das Beseitigen von kleineren Mengen trockenen, eher feinkörnigen Bauschuttes konzipiert. Für solch kleine Materialvolumen von 3 - 7 Kubikmetern waren die bisher bestehenden Sauglader, die mit einer Leistung von 200 - 300 PS arbeiteten, unzweckmässig. Die Saugleistung von 60 - 90 PS des neuen Saugladegerätes reicht völlig aus. Wegen der kleineren Leistung ist der Energieverbrauch des neuen Gerätes wesentlich niedriger als derjenige der bisherigen Sauglader. Der sparsame Energieverbrauch und die Fähigkeit, Bauschutt ohne Staubentwicklung aufzusaugen, tragen zur Umweltfreundlichkeit des neuen Saugladegerätes bei.
Ein weiterer Vorteil des neuen Gerätes ist seine einfache Konstruktionsweise, die eine kostengünstige Herstellung und einen sicheren Betrieb erlaubt.
Abschliessend kann gesagt werden, dass wir hier einem sehr zweckmässigen Gerät gegenüberstehen, das sich besonders für die Entfernung kleinerer Schuttmengen, wie man sie z.B. bei Bodensanierungen in den Zwischenböden antrifft, eignet.

## Patentansprüche

1. Saugladegerät für trockenen und feinkörnigen Bauschutt, mit einem Saugaggregat (6), mit dessen Hilfe das zu entfernende Material über einen Förderschlauch (14) in einen Transportbehälter gefördert wird, und einem Schuttank (1), an dem das Saugaggregat (6) befestigt ist und mit dessen Innenraum das Saugaggregat (6) über ein Saugrohr (5) verbunden ist, wobei der Schuttank (1) ferner mit einem Sauganschluß (13) für den Förderschlauch (14) versehen ist, dadurch **gekennzeichnet**, daß der Schuttank (1) mit Standbeinen (17) versehen ist und zum Anheben des Gerätes auf beiden Seiten des Schuttanks je zwei zapfenartige Halterungen (18) angeordnet sind, so daß das Saugladegerät durch einen Muldentransportlastwagen aufhebbar ist.

2. Saugladegerät nach Anspruch 1, dadurch gekennzeichnet, dass der Schuttank (1) als liegender Zylinder mit gewölbten Stirnwänden ausgebildet ist.

3. Saugladegerät nach Anspruch 1 oder 2, dadurch gekennzeichnet, dass das Saugaggregat (6) in einer an einer Stirnwand des Schuttanks (1) befestigten gedeckten Kabine (8) angeordnet ist.

4. Saugladegerät nach einem der Ansprüche 1 bis 3, dadurch gekennzeichnet, dass die dem Saugaggregat (6) gegenüberliegende Stirnwand als luftdicht verschliessbarer Deckel (9) für die Entleerung des Schuttanks (1) ausgebildet ist.

5. Saugladegerät nach Anspruch 4, dadurch gekennzeichnet, dass der Deckel (9) am Schuttank (1) mittels eines Deckelscharniers (10) schwenkbar gelagert ist.

6. Saugladegerät nach Anspruch 1, dadurch gekennzeichnet, dass der mit dem Saugrohr (5) in Verbindung stehende Teil des Schuttanks (1) zur Bildung eines Vorabscheideraumes (21) durch eine Querwand (20) mit einer oben liegenden Vorabscheidereintrittsöffnung (22) gegen den übrigen Innenraum des Schuttanks (1) abgegrenzt ist.

7. Saugladegerät nach Anspruch 6, dadurch gekennzeichnet, dass die Querwand (20) im unteren Bereich mit einer Klappe (24) versehen ist, die um ein an ihrer oberen Kante vorgesehenes Scharnier (25) schwenkbar ist.

8. Saugladegerät nach Anspruch 1, dadurch gekennzeichnet, dass die mit dem Saugrohr verbundene Luftaustrittsöffnung (3) mit einer nur nach unten offenen Abschirmung (23) versehen ist.

9. Saugladegerät nach Anspruch 1 oder 4, dadurch gekennzeichnet, dass der Sauganschluss (13) für den Förderschlauch (14) im oberen Drittel des Deckels (9) angebracht ist.

10. Saugladegerät nach einem der vorhergehenden Ansprüche, dadurch gekennzeichnet, dass am Umfang des Schuttanks (1) Schlauchträger (16) zur Aufnahme von Schlauchelementen (15) des Förderschlauches (14) befestigt sind.

## Claims

1. Suction loader device for dry and fine-grained building rubble comprising a suction unit (6), with the help of which the material to be removed is transported via a transport hose (14) into a transport container, and a disposal tank (1), to which the suction unit (6) is attached and with the interior of which the suction unit (6) is connected via a suction pipe (5), in conjunction with which the disposal tank (1) is also provided with a suction connection (13) for the transport hose (14), characterized in that the disposal tank (1) is provided with support legs (17), and in that two trunnion-like supports (18) are arranged on both sides of the disposal tank for the purpose of lifting the device, so that the suction loader device can be lifted by a refuse collection truck.

2. Suction loader device as claimed in Claim 1, characterized in that the disposal tank (1) is executed as a horizontal cylinder with dished end walls.

3. Suction loader device as claimed in Claim 1 or 2, characterized in that the suction unit (6) is arranged inside a covered cabin (8) attached to one end wall of the disposal tank (1).

4. Suction loader device as claimed in one of the Claims 1 to 3, characterized in that the end wall opposite the suction unit (6) is executed as an airtight, closable cover (9) for emptying the disposal tank (1).

5. Suction loader device as claimed in Claim 4, characterized in that the cover (9) on the disposal tank (1) is pivotally mounted by means of a cover hinge (10).

6. Suction loader device as claimed in Claim 1, characterized in that the part of the disposal tank (1) connected to the suction pipe (5) is separated from the rest of the interior of the disposal tank (1) by a transverse wall (20) with a pre-separation orifice (22) at the top so as to form a pre-separation chamber (21).

7. Suction loader device as claimed in Claim 6, characterized in that the transverse wall (20) is provided on its lower part with a flap (24) capable of pivoting about a hinge (25) provided on its upper edge.

8. Suction loader device as claimed in Claim 1, characterized in that the air outlet orifice (3) connected to the suction pipe is provided with a shroud (23) that is open only in a downward sense.

9. Suction loader device as claimed in Claim 1 or 4, characterized in that the suction connection (13) for the transport hose (14) is installed in the top one third of the cover (9).

10. Suction loader device as claimed in one of the preceding Claims, characterized in that hose supports (16) to accept hose elements (15) of the transport hose (14) are attached to the outside of the disposal tank (1).

## Revendications

1. Dispositif de chargement par aspiration pour gravats, avec un groupe d'aspiration (6), à l'aide duquel les matériaux à débarrasser sont transportés à travers un flexible de refoulement (14) dans un container de transport, et un réservoir à gravats (1) auquel est fixé le groupe d'aspiration (6). Le groupe d'aspiration (6) est relié à l'intérieur du réservoir à gravats par un tuyau d'aspiration (5). Le réservoir à gravats est également équipé d'un raccord d'aspiration (13) pour le tuyau de refoulement (14), caractérisé par le fait que le réservoir à gravats (1) est équipé de jambes support (17) et de deux brides de support coniques (18) placées des deux côtés du réservoir pour soulever l'appareil ; le dispositif de chargement par aspiration peut ainsi être soulevé par un camion transporteur d'auges.

2. Dispositif de chargement par aspiration d'après spécification 1, caractérisé par le fait que le réservoir à gravats (1) est constitué d'un cylindre avec parois d'extrémité bombées.

3. Dispositif de chargement par aspiration d'après spécification 1 ou 2, caractérisé par le fait que le groupe d'aspiration (6) est placé dans une cabine (8) couverte fixée à l'une des parois d'extrémité du réservoir à gravats (1).

4. Dispositif de chargement par aspiration d'après l'une des spécifications 1 à 3, caractérisé par le fait que la paroi d'extrémité opposée au groupe d'aspiration (6) constitue un couvercle (9) hermétiquement fermé pour la vidange du réservoir à gravats (1).

5. Dispositif de chargement par aspiration d'après spécification 4, caractérisé par le fait que le couvercle (9) du réservoir à gravats (1) est logé de façon à pouvoir pivoter au moyen d'une charnière (10).

6. Dispositif de chargement par aspiration d'après spécification 1, caractérisé par le fait que la partie du réservoir à gravats (1) reliée au tuyau d'aspiration (5) est séparée du reste de l'intérieur du réservoir à gravats par une paroi transversale (20), de façon à former un espace de préfractionnement (21), avec une ouverture vers le haut (22).

7. Dispositif de chargement par aspiration d'après spécification 6, caractérisé par le fait que la paroi transversale (20) est équipée d'un volet (24) dans sa partie inférieure. Ce volet peut pivoter autour d'une charnière (25) prévue sur son bord supérieur.

8. Dispositif de chargement par aspiration d'après spécification 1, caractérisé par le fait que l'ouverture de sortie d'air reliée au tuyau d'aspiration (3) est équipée d'une protection (23) ouverte uniquement vers le bas.

9. Dispositif de chargement par aspiration d'après spécification 1 ou 4, caractérisé par le fait que le raccord d'aspiration (13) pour le tuyau de refoulement (14) est placé dans le tiers supérieur du couvercle (9).

10. Dispositif de chargement par aspiration d'après l'une des spécifications ci-dessus, caractérisé par le fait qu'à la périphérie du réservoir à gravats (1), des supports de tuyau (16) sont fixés pour retenir des éléments de flexible (15) du tuyau de refoulement (14).
